(19) **Europäisches Patentamt / European Patent Office / Office européen des brevets**

(11) **EP 4 722 983 A1**

(12) # EUROPEAN PATENT APPLICATION

(43) Date of publication:
08.04.2026 Bulletin 2026/15

(21) Application number: 25206486.0

(22) Date of filing: 02.10.2025

(51) International Patent Classification (IPC):
$G06N\ 3/0455$ (2023.01)    $G06N\ 3/096$ (2023.01)
$G06T\ 5/60$ (2024.01)

(52) Cooperative Patent Classification (CPC):
G06N 3/0455; G06N 3/096; G06T 5/60;
G06T 2207/20081; G06T 2207/20084

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **02.10.2024 US 202463702570 P**

(71) Applicant: **Google LLC**
**Mountain View, CA 94043 (US)**

(72) Inventors:
- **VICOL, Paul Adrian**
  **Toronto, M5H 2G4 (CA)**
- **LI, Yinxiao**
  **Mountain View, 94043 (US)**
- **XING, Xiaoying**
  **San Jose, 95133 (US)**
- **SAHA, Avinab**
  **Mountain View, 94043 (US)**
- **RYU, Mungyung**
  **Mountain View, 94043 (US)**
- **HAO, Susan**
  **Mountain View, 94043 (US)**
- **YANG, Feng**
  **Mountain View, 94043 (US)**
- **RAMACHANDRAN, Deepak**
  **Mountain View, 94043 (US)**
- **HE, Junfeng**
  **Mountain View, 94043 (US)**
- **LI, Gang**
  **Santa Clara, 95050 (US)**
- **YOUNG, Sarah Ming**
  **Mountain View, 94043 (US)**
- **SINGLA, Sahil**
  **Mountain View, 94043 (US)**

(74) Representative: **Thorniley, Peter**
**Venner Shipley LLP**
**200 Aldersgate**
**London EC1A 4HD (GB)**

(54) **MODIFYING TARGET REGIONS WITHIN AN IMAGE USING A DIFFUSION NEURAL NETWORK**

(57) Methods, systems, and apparatus, including computer programs encoded on computer storage media, for training a diffusion neural network using a region-aware fine-tuning process. After training, the diffusion neural network can be used to generate an image conditioned on a conditioning input.

FIG. 2

EP 4 722 983 A1

**Description**

CROSS-REFERENCE TO RELATED APPLICATION

This application claims priority to U.S. Provisional Application No. 63/702,570, filed on October 2, 2024. The disclosure of the prior application is considered part of and is incorporated by reference in the disclosure of this application.

BACKGROUND

This specification relates processing data, e.g., image data, using machine learning models.

As one example, neural networks are machine learning models that employ one or more layers of nonlinear units to predict an output for a received input. Some neural networks include one or more hidden layers in addition to an output layer. The output of each hidden layer is used as input to another layer in the network, e.g., the next hidden layer or the output layer. Each layer of the network generates an output from a received input in accordance with current values of a respective set of weights.

SUMMARY

This specification describes a training system implemented as computer programs on one or more computers in one or more locations that trains a diffusion neural network using a region-aware fine-tuning process. After training, the diffusion neural network can be used to generate an image conditioned on a conditioning input.

Particular embodiments of the subject matter described in this specification can be implemented so as to realize one or more of the following advantages.

Leveraging the region-aware fine-tuning process, the training system improves both computational resource (e.g., processing memory resource) efficiency and power resource (e.g., electricity power) efficiency when fine-tuning, i.e., further training, a pre-trained diffusion neural network to improve the quality of the images that can be generated by the diffusion neural network once its fine-tuned. As such, an improved diffusion neural network for the generation of images (e.g. under constraints set by inputs such as user inputs) can be realized for a reduced technical overhead. Moreover, the adoption of region-aware fine-tuning may reduce the number or complexity of the parameters necessary to achieve a given quality of image output; this can reduce the storage requirements of the diffusion neural network when stored on a device having a finite memory and/or reduce the computation overhead from operating the diffusion neural network.

The consumption of computational and power resources can be reduced because the diffusion neural network is trained to learn to apply regional, rather than global, edits to reference images generated by a pre-trained diffusion neural network. In particular, the training system trains the diffusion neural network to generate a modified image that has a higher quality than a reference image by applying edits to a relatively small target region within the reference image while maintaining overall visual similarity or faithfulness between the reference image and the modified image. The quality can be defined with respect to any aspect or any combination of aspects of the output image, e.g., a safety aspect, an artifact aspect, a faithfulness aspect (e.g. relative to a conditioning input such as a textual prompt), and so on.

Since the diffusion neural network is trained to generate modified images having largely the same high-level structure as the reference images and containing minimal global image-level changes with respect to the reference images, the scope of parameter update and hence, the number of training iterations is reduced in comparison to traditional fine-tuning techniques that use a global reward. By reducing the number of training iterations, the consumption of computational and power resource is therefore reduced.

In some implementations the training system need only learn new values for a smaller proportion of the parameters of the diffusion neural network, relative to the number of parameters that have been learned during the pre-training process. Thus, the amount of computing resources to be consumed by the fine-tuning of the diffusion neural network can be further reduced. For example, the amount of processing resources used by the fine-tuning process can be further reduced.

When deployed in an image generation system for image generation after the training, the diffusion neural network outperforms the pre-trained diffusion neural network or other diffusion neural networks fine-tuned using traditional fine-tuning techniques. For example, images generated by the diffusion neural network will have fewer perceptual artifacts or less implausibility, better alignment with textual prompts, and less content that negatively impacts the safety aspect of the images, compared to images generated by the pre-trained diffusion neural network.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 shows an example training system and an example image generation system.

FIG. 2 shows an example of operations performed by a training system to train a diffusion neural network.

FIG. 3 is a flow diagram of an example process for generating an image using a diffusion neural network.

FIG. 4 shows an example of the performance gains of a diffusion neural network fine-tuned using the region-aware fine-tuning process.

Like reference numbers and designations in the various drawings indicate like elements.

DETAILED DESCRIPTION

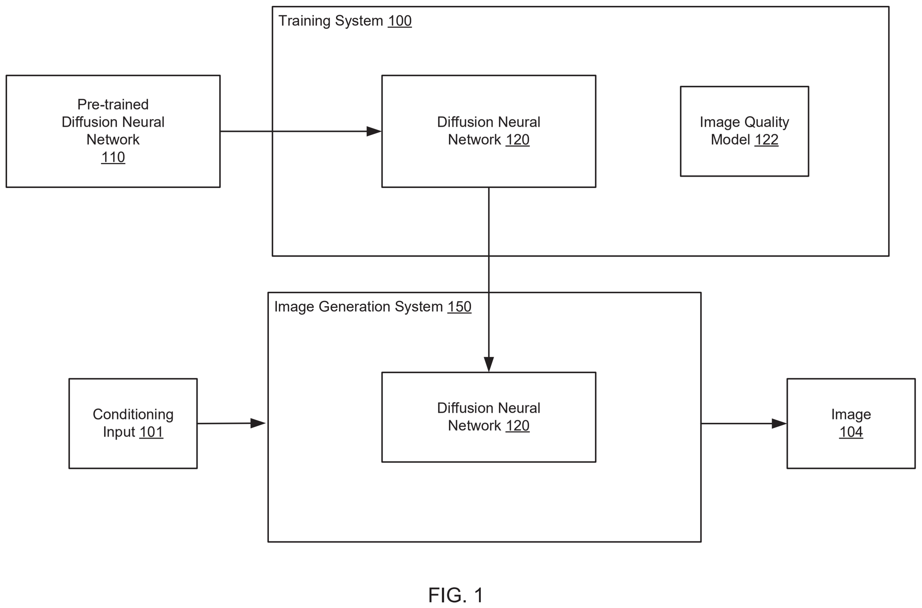

FIG. 1 shows an example training system 100 and an example image generation system 150. The training system 100 and the image generation system 150 are examples of a system implemented as computer programs on one or more computers in one or more locations, in which the systems, components, and techniques described below can be implemented.

The training system 100 trains a diffusion neural network 120 using an image quality model 122.

After the training, the image generation system 150 can generate an image 104 conditioned on a conditioning input 101 by executing a denoising process using the diffusion neural network 120. By executing the denoising process, the image generation system 150 uses the diffusion neural network 120 to generate new intensity values of the pixels of the image 104.

Generally, the conditioning input 101 characterizes one or more desired properties for the image 104, i.e., characterizes one or more properties that the image 104 generated by the image generation system 150 should have.

As an example, the conditioning input 101 can be a sequence of text, e.g., a caption for the image 104 or another description of the content of the image 104.

As another example, the conditioning input 101 can be an object detection input that specifies one or more bounding boxes and, optionally, a respective type of object that should be depicted in each bounding box.

As another example, the conditioning input 101 can specify an object class from a plurality of object classes to which an object depicted in the image 104 should belong.

As another example, the conditioning input 101 can include one or more images.

As yet another example, the conditioning input 101 can be a different type of structured input, e.g., a mesh or a graph that specifies properties of the image 104 to be generated.

More generally, the conditioning input 101 can include one or more different types of inputs of one or more different modalities, e.g., only text, only one or more images, both text and one or more images, and so on.

To train the diffusion neural network 120, the training system 100 obtains data specifying a pre-trained diffusion neural network 110 and then fine-tunes, i.e., further trains, the pre-trained diffusion neural network 110 by performing a region-aware fine-tuning process. The pre-trained diffusion neural network 110 after the fine-tuning will be referred to as the diffusion neural network 120.

Performing the region-aware fine-tuning process includes training the diffusion neural network 120 to generate a modified image that includes edits to a target region within a reference image generated by the pre-trained diffusion neural network 110.

During fine-tuning, the training system 100 uses the image quality model 122 to determine the target region within the reference image based on processing the reference image to generate data that characterizes a quality of each of a plurality of regions within the reference image.

The target region can be any region within the reference image. The target region includes a proper subset of the pixels of the reference image. That is, the target region includes some, but fewer than all, of the pixels of the reference image.

Compared to the reference image, the modified image has a target region that is different from the target region within the reference image, while also having regions outside the target region that satisfy a consistency or similarity criterion with the corresponding regions within the reference image.

For example, a distance between (i) the pixels in the target region within the reference image and (ii) the pixels in the target region within the modified image can be greater than a threshold distance. In contrast, a distance between (i) the pixels outside the target region within the reference image and (ii) the pixels outside the target region within the modified image can be smaller than the threshold distance.

The distance can be computed in any appropriate way. For example, the distance can be computed as a Euclidean distance or another distance measure, such as Manhattan distance, in an image space. As another example, the distance can be computed as a Fréchet Inception Distance, an Inception Score, or a learned perceptual image patch similarity.

The pre-trained diffusion neural network 110 can be any appropriate diffusion neural network that has been trained, by the training system 100 or a separate training system, to, at any given update step in the denoising process, receive a diffusion input that includes an intermediate (noisy) representation of an image and a representation (e.g., an embedding) of a conditioning input and process the diffusion input to generate a denoising output.

For example, the pre-trained diffusion neural network 110 can have been trained on a set of training images using a mean squared error (MSE) objective function or another suitable diffusion loss function. Notably, the pre-trained diffusion neural network 110 can have been trained without using the image quality model 122.

In some implementations, the diffusion neural network 120 performs the denoising process in a pixel space. The pixel space is a space in which intensity values of the pixels of the images reside. In these implementations, the representations operated on and generated by the diffusion neural network have values for each pixel that specify intensity values, e.g., RGB values or another color encoding scheme.

Examples of such diffusion neural networks include Imagen, as described in Saharia, Chitwan, et al. "Photorealistic text-to-image diffusion models with deep language understanding." Advances in neural information processing systems 35 (2022): 36479-36494.

In some other implementations, the diffusion neural network 120 performs the denoising process in a latent space, e.g., in a latent space that is lower-dimensional than the pixel space. That is, the representations operated on by the diffusion neural network are latent representations and the values in the representations are learned, latent values, e.g., rather than intensity values of the pixels of the images.

Examples of such diffusion neural networks include any one of the diffusion neural networks described in Hoogeboom, Emiel, Jonathan Heek, and Tim Salimans. "simple diffusion: End-to-end diffusion for high resolution images." International Conference on Machine Learning. PMLR, 2023, and Zhao, Yang, et al. "Mobilediffusion: Instant text-to-image generation on mobile devices." European Conference on Computer Vision. Cham: Springer Nature Switzerland, 2024.

In these implementations, during training, the diffusion neural network 120 can be associated with an encoder to encode training images into the latent space and, after training and to generate new images, a decoder neural network that receives an input that includes a latent representation of an image and decodes the latent representation to reconstruct the image.

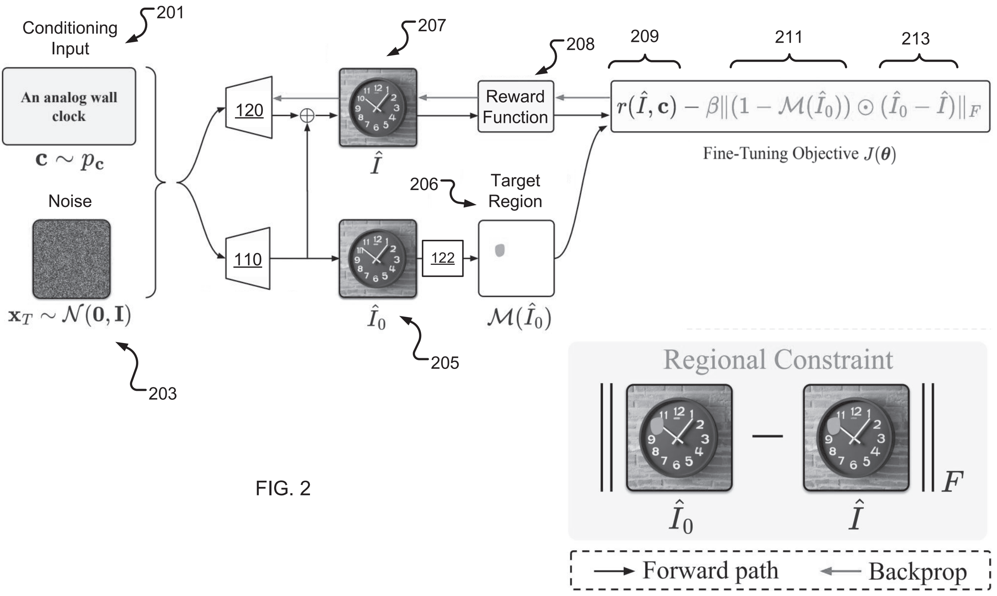

FIG. 2 shows an example of operations performed by the training system 100 to train the diffusion neural network 120. The training system 100 can repeatedly perform these operations on different conditioning inputs to train the diffusion neural network 120.

The training system 100 obtains a conditioning input 201 that characterizes one or more desired properties of an image. In the example of FIG. 2, the conditioning input 201 is a sequence of text in some natural language that describes the content of the output image: "An analog wall clock."

The training system 100 obtains a noise 203 by sampling from a corresponding noise distribution, e.g., a Gaussian distribution or a different noise distribution.

The training system 100 performs, using the pre-trained diffusion neural network 110 and in accordance with the pre-trained values of the parameters of the pre-trained diffusion neural network 110 that have been determined as a result of the training of the pre-trained diffusion neural network 110, a denoising process to generate a first image 205 (a reference image) based on the conditioning input 201 and the noise 203.

The training system 100 determines the target region 206 within the first image 205. In the illustrated model the target region 206 can be determined by using the image quality model 122. The target region 206 includes a subset of pixels of the first image 205.

The target region 206 can be determined by using the image quality model 122 from the first image 205 in any of a variety of ways, depending on the configuration of the image quality model 122. Once determined, the target region 206 can be defined by a target region mask. As such, the image quality model 122 may also be referred to as a "mask function."

In some implementations, the training system 100 processes the first image 205 using the image quality model 122 to generate a heatmap or a mask that identifies the target region 206 within the first image 205.

For example, the image quality model 122 can be a heatmap/mask prediction neural network that has been configured through training to process an image to generate a predicted heatmap or mask that identifies artifacts and misalignment regions within the image. One of the misalignment regions or regions that contain artifacts can then be used as the target region 206.

An example of such an image quality model is described in Liang, Youwei, et al. "Rich human feedback for text-to-image generation." Proceedings of the IEEE/CVF Conference on Computer Vision and Pattern Recognition. 2024.

In some implementations, the training system 100 processes the first image 205 using the image quality model 122 to generate a plurality of quality scores, e.g., a quality score for each of a plurality of subsets of the pixels of the first image 205, where each quality score represents a quality of the corresponding subset of the pixels.

An example of such an image quality model is described in Hao, Susan, et al. "Safety and fairness for content moderation in generative models." arXiv preprint arXiv:2306.06135 (2023).

The training system 100 then applies a gradient-based saliency map to the plurality of quality scores to map the plurality of quality scores to a heatmap that identifies specific regions within the first image 205. One of the specific regions can then be used as the target region 206.

An example of such a gradient-based saliency map is described in Selvaraju, Ramprasaath R., et al. "Grad-cam: Visual explanations from deep networks via gradient-based localization." Proceedings of the IEEE international conference on computer vision. 2017.

In either implementation, optionally, the training system 100 further processes the heatmap (whether directly from the image quality model 122 or through a gradient-based saliency map), and then determines the target region 206 from the further processed heatmap.

Examples of suitable further processing operations include thresholding operations (which discard pixels below a certain threshold value in the heatmap), filtering main connected regions (which isolate the most significant problematic areas), dilation operations (which relax the restriction on the identified regions, allowing for adjustments beyond the strict heatmap boundaries), and Gaussian smoothing operations (which increase spatial coherence).

The training system 100 performs, using the diffusion neural network 120 and in accordance with the current values of the parameters of the diffusion neural network 120, a denoising process to generate a second image 207 (a modified image) based on the conditioning input 201 and the noise 203.

Thus, the first image 205 and the second image 207 are generated by using different neural networks-i.e., the pre-trained diffusion neural network 110 and the diffusion neural network 120, respectively-based on the same conditioning input 201 and the same noise 203.

The training system 100 trains the diffusion neural network 120 to update current values of at least a subset of the parameters of the diffusion neural network 120 based on optimizing a fine-tuning objective function.

The fine-tuning objective function includes a first term 209 that is dependent on a reward score for the second image 207 that is determined by using a reward function 208.

The reward function 208 is used by the training system 100 during the training of the diffusion neural network 120 and not during the training of the pre-trained diffusion neural network 110. That is, the pre-trained diffusion neural network 110 has been trained on a diffusion loss function that does not use the reward function 208.

The reward function 208 can be any appropriate differentiable reward function that maps an input that includes (i) an image or a portion thereof or (ii) a latent representation of an image or a portion thereof to a reward score. Optionally, the reward function input can also include the conditioning input 101 or a representation of the conditioning input 101.

For example, the reward function 208 can include one or more trained reward machine learning models, e.g., neural networks. Each trained reward machine learning model has been configured through training to measure a different aspect of an image by processing an input that includes the image or a portion thereof.

As one example, the reward function 208 can include a machine learning model that maps at least a portion of the reward function input to a score that represents an aesthetic quality of the image.

As a particular example of a reward function 208 that represents aesthetic quality, an aesthetic predictor model can be trained on a data set that includes multiple images that have each been assigned an aesthetic score that measures the aesthetic quality of the image. That is, the predictor can have been trained, e.g., using a mean squared error or a mean absolute error loss, to predict the aesthetic scores for the images in the data set.

As another example, the reward function 208 can include a machine learning model that maps at least a portion of the reward function input to a score that represents a predicted quality of the image as would be rated by a human user. For example, the reward function can be a reward model that has been trained to model human preferences, e.g., on an objective function that trains using human preferences between pairs of images. One example of such a model is the Human Preference Score v2 model, described in Wu, Xiaoshi, et al. "Human preference score v2: A solid benchmark for evaluating human preferences of text-to-image synthesis." arXiv preprint arXiv:2306.09341 (2023).

As another example, the reward function 208 can include a machine learning model trained to perform an image detection or recognition task, so that the reward function penalizes the image for including a particular class. For example, the model can be an object detection model, e.g., an open-vocabulary object detection model. In this example, the training system 100 can pass images generated by the diffusion neural network 120 through a pre-trained object detection model, together with a set of queries Q that should be excluded from the generated images. As the reward score, the training system 100 can use the sum of scores for the localized objects corresponding to all of the queries, the sum of the areas of their bounding boxes, or the sum of both.

As another example, the reward function 208 can include a reward that causes the diffusion neural network 120 to generate adversarial examples. That is, the training system 100 can fine-tune the diffusion neural network 120 such that images generated based on a conditioning input for a class *y* are classified as a different class y' by a pre-trained classifier for images of the particular type. For example, as the reward score, the training system 100 can use the negative cross-entropy to the target class by the pre-trained classifier.

As another example, the reward function 208 can include one or more hard-coded differentiable reward functions.

For example, one hard-coded reward function can include a function that measures the compressibility of the image. For example, the compressibility reward function can pass the image through differentiable compression ($c(\cdot)$) and decompression ($d(\cdot)$) algorithms to obtain a reconstruction of the image, and then output, as the reward score, a value based on an error, e.g., the Euclidean distance, between the original and reconstructed images, e.g., the error or a negative of the error, e.g. $-\|x - d(c(x))\|_2^2$ .

When there are multiple reward models that each measure a different aspect of the second image in the reward function 208, the final reward score can be a sum or a weighted sum of the reward scores generated by the models.

The fine-tuning objective function includes a second term that is dependent on a product of (i) a first sub-term 211 that depends on the target region 206 within the first image 205 and (ii) a second sub-term 213 that depends on a difference between the first image 205 and the second image 207.

This second term is a regional constraint term that penalizes the diffusion neural network 120 for generating a second image that includes changes outside the target region compared to a first image generated by the pre-trained diffusion neural network 110.

In the example of FIG. 2, the first sub-term 211 is computed as a constant (e.g., one) minus a target region mask (also referred to as a "regional map") that defines the target region 206. In this example, where the constant is one, the first sub-term 211 is effectively an inverse target region mask that defines regions within the first image 205 outside the target region 206.

In the example of FIG. 2, the second sub-term 213 is computed as a pixel-wise difference between the first image 205 and the second image 207.

In the example fine-tuning objective function illustrated in the top right corner of FIG. 2, $\beta$ is a hyperparameter that controls the strength of the regional constraint imposed by the second term, where a higher $\beta$ corresponds to a stronger penalty for changes outside the target region 206, $\odot$ denotes a Hadamard product (element-wise multiplication), and $\|\cdot\|_F$ denotes a Frobenius norm.

In some implementations, by performing these operations, the training system 100 updates all of the parameters of the diffusion neural network 120.

For example, prior to the training, the training system 100 instantiates the diffusion neural network 120 based on the pre-trained diffusion neural network 110 such that the diffusion neural network 120 has the same architecture and parameter values as the pre-trained diffusion neural network 110, and then, as a result of the training, the training system 100 updates the parameters of the diffusion neural network 120 to have different values than the pre-trained values of the parameters of the pre-trained diffusion neural network 110.

In some other implementations, the diffusion neural network 120 has a first set of parameters (a set of adapter parameters) and a second set of parameters (a set of base parameters) and, as part of the training of the diffusion neural network 120, the training system 100 updates the first set of parameters while holding the second set of parameters fixed.

For example, the pre-trained diffusion neural network 110 can include the second set of parameters but does not include the first set of parameters.

In this example, the training system 100 can, during the training, hold the second set of parameters fixed to pre-trained values determined as a result of the training of the pre-trained diffusion neural network 110 that does not include the first set of parameters.

For example, the training system 100 can use a low-rank approximation (LoRA) technique (Hu et al., arXiv:2106.09685, 2021) when performing the training. In this case, for each of one or more weight matrices that are included in the second set of parameters, the first set of parameters include a low-rank factorization of an update weight matrix that can be used to update the weight matrix. The low-rank approximation technique can be performed on multiple different weight matrices to update corresponding different layers of the pre-trained diffusion neural network 110.

The training system 100 can use the low-rank approximation to approximate an update to the update weight matrix during each training update of the diffusion neural network, e.g., by optimizing a product of two smaller matrices in order to reduce the dimensionality of the calculation required to compute the change in weights required by the update. More specifically, performing a low-rank approximation refers to breaking up the update weight matrix into a product of two smaller matrices that when multiplied together can recover the values of update weight matrix with high fidelity. In particular, the low-rank decomposition can represent $W_0 + \Delta W \approx W_0 + BA$, where $W_0$ is a weight matrix in the second set of parameters, $\Delta W$ is the update weight matrix corresponding to $W_0$ and the product $BA$ approximates $\Delta W$. For example, the second set of parameters can include a set of parameters of the pre-trained diffusion neural network 110 that are held fixed during the training of the diffusion neural network 120, and the first set of parameters can include a set of parameters that are added to the pre-trained diffusion neural network 110 prior to the training of the diffusion neural network 120 and that are adjusted during the training.

In this case, the rank of a matrix refers to the number of linearly independent vectors, e.g., the sum of columns or rows within the matrix decomposition *BA* that do not contain correlative data. The rank determined specifies the dimensionality of the update needed by providing a constraint on the dimensions of the two smaller matrices. For example, in the case in which B is a matrix of dimension $d \times r$ and A has dimension $r \times k$, where r must be the same to enable the matrix multiplication, the rank r can be a value much less than the minimum of d and k, e.g., $r << min(d, k)$.

Thus, during training, the training system 100 learns the weights in matrices B and A instead of directly learning the weights in *ΔW*.

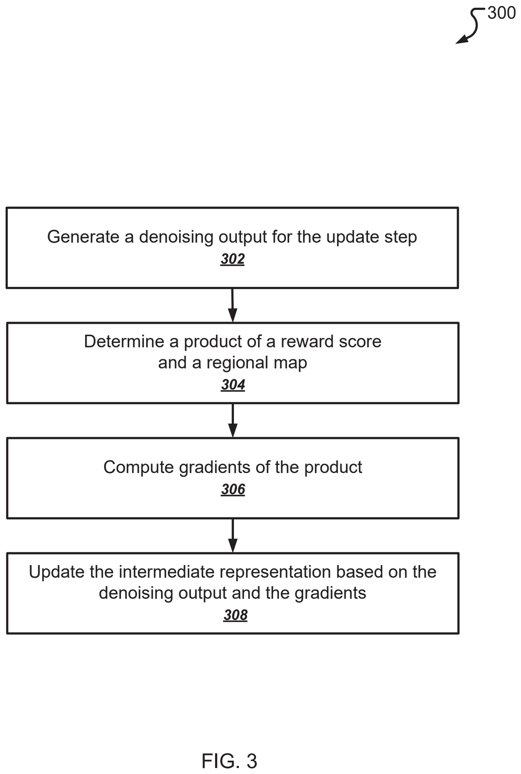

FIG. 3 is a flow diagram of an example process 300 for generating an image using a diffusion neural network. For convenience, the process 300 will be described as being performed by a system of one or more computers located in one or more locations.

For example, a training system, e.g., the training system 100 depicted in FIG. 1, appropriately programmed in accordance with this specification, can perform the process 300. As another example, an image generation system, e.g., the image generation system 150 depicted in FIG. 1, appropriately programmed in accordance with this specification, can perform the process 300.

To generate the image, the system uses the diffusion neural network to repeatedly perform an iteration of the process 300 to update an intermediate representation of the image at each of multiple update steps over a denoising process. That is, the process 300 can be performed at each of the multiple update steps over the denoising process. By repeatedly performing iterations of the process 300, the system can generate the image.

Prior to the first iteration of the process 300, i.e., prior to the first update step, the system receives a conditioning input. Generally, the conditioning input characterizes one or more desired properties for the image, i.e., characterizes one or more properties that the image generated by the system. Notably, during inference, the conditioning input need not include any data that specifies a target region within the image. For example, it does not include any heatmap or segmentation mask.

Prior to the first iteration of the process 300, the system also initializes the intermediate representation of the image, i.e., generates an initial representation of the image. For example, the system can initialize the intermediate representation by sampling the values in the intermediate representation from a distribution, e.g., a Gaussian distribution.

The system processes a diffusion input for the update step that includes an intermediate representation of the image and a representation of the conditioning input using the diffusion neural network to generate a denoising output for the update step (step 302).

The denoising output defines an estimate of the final representation given the intermediate representation.

For example, the denoising output can be an estimate of the noise component of the intermediate representation, i.e., the noise that needs to be combined with, e.g., added to or subtracted from, the final representation to generate the intermediate representation.

As another example, the denoising output can be an estimate of the image or the final representation of the image given the intermediate representation, i.e., an estimate of the image or the final representation of the image that would result from removing the noise component of the intermediate representation.

As another example, the system parametrizes the denoising output differently, e.g., using a v-parameterization (Salimans and Ho arXiv: 2202.00512, 2022, section 4; Appendix D) or another appropriate parameterization.

If the update step is the first update step in the denoising process, the intermediate representation is the initial representation. For any subsequent update step, the intermediate representation is an updated intermediate representation that has been generated in the immediately preceding update step.

In some implementations, the representation of the conditioning input is an encoded representation that is generated by using an encoder neural network to process the conditioning input. For example, where the conditioning input includes a sequence of text, the encoder neural network can include one or more fully connected layers, one or more attention layers, or both.

The system determines a product of (i) a reward score that is generated by using a reward function based on the intermediate representation of the image and (ii) a target region mask that defines a target region of the image (step 304). The target region includes a proper subset of the pixels of the image.

The target region mask is generated by using an image quality model. Examples of the image quality models, as well as how they can be used to generate a target region mask, are described above with reference to FIG. 2.

In some cases, the target region mask is generated by using the image quality model based on a separate image that has been generated by a separate diffusion neural network, e.g., a reference image that has been generated by the pre-trained diffusion neural network based on the same conditioning input and the same initial representation.

In some other cases, the target region mask is generated by using the image quality model based on the image to be generated by the diffusion neural network.

In some implementations where the diffusion neural network performs the denoising process in a pixel space, the system can process the intermediate representation of the image using the image quality model and, optionally, through a gradient-based saliency map to generate the target region mask.

In some other implementations where the diffusion neural network performs the denoising process in a latent space, the system can first process the intermediate representation of the image using a decoder neural network to generate a decoded image in the pixel space, and then process the decoded image using the image quality model and, optionally, through the gradient-based saliency map to generate the target region mask.

The reward function used to generate the reward score can be any one of the example reward functions described above with reference to FIG. 2 and the additional example reward functions described below.

For example, the reward function can include a quality classifier, and the reward score can be a quality score generated by the quality classifier from processing the intermediate representation of the image. The quality classifier can be a machine learning model, e.g., a neural network. The quality score classifies the intermediate representation of the image into one of a set of quality categories, e.g., a high quality category, a low quality category, or another quality category.

As another example, the reward function can include one or more reward models that each measure a different aspect of the intermediate representation of the image, and the reward score is a combination of respective reward scores generated by each of the one or more reward models by processing the intermediate representation of the image. Each reward model can be a machine learning model, e.g., a neural network. As another example, the reward function can include a summation function and the reward score can be a combination, e.g., an unweighted or weighted sum, of the target region masks generated by using the image quality model in one or more preceding update steps.

The system computes gradients of the product with respect to pixels included in the intermediate representation of the image (step 306).

The system updates the intermediate representation of the image based on the denoising output and the gradients (step 308). To do this, the system generates an adjusted denoising output based on the denoising output and the gradients, and then updates the intermediate representation using the adjusted denoising output.

For example, at each update step other than the last, the system can generate an estimate of the intermediate representation using the adjusted denoising output and then apply a diffusion sampler to the estimate. The system can use any appropriate diffusion sampler to update the intermediate representation, e.g., the DDPM (Denoising Diffusion Probabilistic Model) sampler, the DDIM (Denoising Diffusion Implicit Model) sampler or another appropriate sampler, to the estimate to generate the updated intermediate representation. DDPMs are, for example, discussed in Ho *et al.* arXiv:2006:11239.

For the last update step, the estimate can be the updated intermediate representation or the system can use the sampler.

For example, where the denoising output is an estimate of the noise component of the intermediate representation, updating the intermediate representation can include removing (e.g., subtracting) the adjusted denoising output from the intermediate representation.

For example, the adjusted denoising output can be computed by:

$$\hat{\epsilon}_{\boldsymbol{\theta}}(\mathbf{x}_t, \mathbf{c}, t) = \epsilon_{\boldsymbol{\theta}}(\mathbf{x}_t, \mathbf{c}, t) + \lambda \sqrt{1 - \gamma_t} \nabla_{\mathbf{x}_t} r(\mathbf{x}_t) \odot \mathcal{M}(\mathbf{x}_t)$$

In this example, $\varepsilon_\theta$ represents the denoising output generated by the diffusion neural network for the update step, $\theta$ represents the parameters of the diffusion neural network, $x_t$ represents the intermediate representation of the image, c represents the representation of the conditioning input, and t represents the time index data characterizing a noise level of the noise component that is included in the intermediate representation of the image.

$\lambda$ is a guidance magnitude hyperparameter that controls the magnitude of the guidance applied by gradients, $\gamma_t$ is a scaling factor, $\nabla x_t r(x_t) \odot M(x_t)$ represents the gradients of the product of the reward score $r(x_t)$ and the target region mask $M(x_t)$ that are computed with respect to pixels included in the intermediate representation $x_t$, where $\odot$ denotes that the product is computed as an elementwise product (Hadamard product).

In some implementations, the system also generates one or more additional denoising outputs for the update step, and the system computes the adjusted denoising output based on those additional denoising outputs. For example, the adjusted denoising output can be computed as a weighted or unweighted sum of the denoising output $\varepsilon_\theta$, the gradients of the product $\nabla_{xt} r(x_t) \odot M(x_t)$, and the one or more additional denoising outputs.

For example, the system can make use of classifier-free guidance.

In this example, the system processes a second diffusion input for the update step that includes the intermediate representation of the image but not the representation of the conditioning input using the diffusion neural network to generate an unconditional denoising output for the update step. For example, the second diffusion input can include the intermediate representation of the image and a predetermined representation that indicates unconditional sampling.

In some implementations, the system uses gradient clipping to prevent overly large updates which may cause distortions. That is, in response to determining that a gradient exceeds a predetermined threshold value, the system clips the gradient to have the predetermined threshold value. In these implementations, the adjusted denoising output will be generated based on the denoising output and the clipped gradients.

By repeatedly performing multiple iterations of the process 300, the system can generate the image.

In some implementations where the diffusion neural network performs the denoising process in a pixel space, the image is the updated intermediate representation generated in the last iteration of the process 300.

In some other implementations where the diffusion neural network performs the denoising process in a latent space, the system processes the updated intermediate representation generated in the last iteration of the process 300 using the decoder neural network to generate the image.

Iterations of the process 300 can be performed either during the training of the diffusion neural network (e.g., by the training system 100), or during inference (e.g., by the image generation system 150).

Having generated the image during inference, the image generation system can output the image for presentation to a user on a display device. For example, the image generation system can present the image on a user interface through which the user provides the conditioning input. Additionally or alternatively, the image generation system can store the image in a data storage for some future purpose. Additionally or alternatively, the system can provide the image to another image processing system for further processing.

Alternatively, having generated the image during training, the training system can update the current values of at least a subset of the parameters of the diffusion neural network based on optimizing a fine-tuning objective function that is computed based on the image, as described above with reference to FIG. 2.

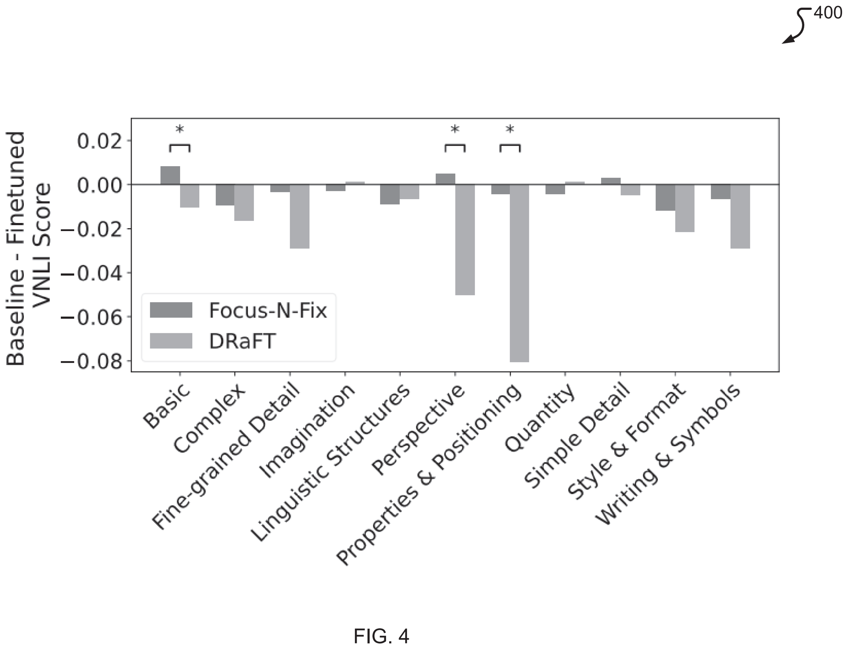

FIG. 4 shows an example 400 of the performance gains of a diffusion neural network fine-tuned using the region-aware fine-tuning process relative to a diffusion neural network fine-tuned using a baseline fine-tuning process (the direct reward fine-tuning (DRaFT) process, as described in Clark, Kevin, et al. "Directly fine-tuning diffusion models on differentiable rewards." arXiv preprint arXiv:2309.17400 (2023)).

As can be seen from the example 400, the diffusion neural network fine-tuned using the region-aware fine-tuning process (Focus-N-Fix) outperforms, i.e., achieves higher VNLI scores than, the diffusion neural network fine-tuned using a baseline fine-tuning process (DRaFT) across a range of categories of conditioning inputs, from basic conditioning inputs to writing & symbols conditioning inputs.

A VNLI score evaluates various aspects of text-image alignment such as positioning, quantity (counting), etc. The VNLI score is descred in more detail in Yarom, Michal, et al. "What you see is what you read? improving text-image alignment evaluation." Advances in Neural Information Processing Systems 36 (2023): 1601-1619.

In this specification, the term "configured" is used in relation to computing systems and environments, as well as computer program components. A computing system or environment is considered "configured" to perform specific operations or actions when it possesses the necessary software, firmware, hardware, or a combination thereof, enabling it to carry out those operations or actions during operation. For instance, configuring a system might involve installing a software library with specific algorithms, updating firmware with new instructions for handling data, or adding a hardware component for enhanced processing capabilities. Similarly, one or more computer programs are "configured" to perform particular operations or actions when they contain instructions that, upon execution by a computing device or hardware, cause the device to perform those intended operations or actions.

The embodiments and functional operations described in this specification can be implemented in various forms, including digital electronic circuitry, software, firmware, computer hardware (encompassing the disclosed structures and their structural equivalents), or any combination thereof. The subject matter can be realized as one or more computer programs, essentially modules of computer program instructions encoded on a tangible non-transitory storage medium for execution by or to control the operation of a computing device or hardware. The storage medium can be a storage device such as a hard drive or solid-state drive (SSD), a storage medium, a random or serial access memory device, or a combination of these. Additionally or alternatively, the program instructions can be encoded on a transmitted signal, such as a machine-generated electrical, optical, or electromagnetic signal, designed to carry information for transmission to a receiving device or system for execution by a computing device or hardware. Furthermore, implementations may leverage emerging technologies like quantum computing or neuromorphic computing for specific applications, and may be deployed in distributed or cloud-based environments where components reside on different machines or within a cloud infrastructure.

The term "computing device or hardware" refers to the physical components involved in data processing and encompasses all types of devices and machines used for this purpose. Examples include processors or processing units, computers, multiple processors or computers working together, graphics processing units (GPUs), tensor processing units (TPUs), and specialized processing hardware such as field-programmable gate arrays (FPGAs) or application-specific integrated circuits (ASICs). In addition to hardware, a computing device or hardware may also include code that creates an execution environment for computer programs. This code can take the form of processor firmware, a protocol stack, a database management system, an operating system, or a combination of these elements. Embodiments may particularly benefit from utilizing the parallel processing capabilities of GPUs, in a General-Purpose computing on Graphics Processing Units (GPGPU) context, where code specifically designed for GPU execution, often called kernels or shaders, is employed. Similarly, TPUs excel at running optimized tensor operations crucial for many machine learning algorithms. By leveraging these accelerators and their specialized programming models, the system can achieve significant speedups and efficiency gains for tasks involving artificial intelligence and machine learning, particularly in areas such as computer vision, natural language processing, and robotics.

A computer program, also referred to as software, an application, a module, a script, code, or simply a program, can be written in any programming language, including compiled or interpreted languages, and declarative or procedural languages. It can be deployed in various forms, such as a standalone program, a module, a component, a subroutine, or any other unit suitable for use within a computing environment. A program may or may not correspond to a single file in a file system and can be stored in various ways. This includes being embedded within a file containing other programs or data (e.g., scripts within a markup language document), residing in a dedicated file, or distributed across multiple coordinated files (e.g., files storing modules, subprograms, or code segments). A computer program can be executed on a single computer or across multiple computers, whether located at a single site or distributed across multiple sites and interconnected through a data communication network. The specific implementation of the computer programs may involve a combination of traditional programming languages and specialized languages or libraries designed for GPGPU programming or TPU utilization, depending on the chosen hardware platform and desired performance characteristics.

In this specification, the term "engine" broadly refers to a software-based system, subsystem, or process designed to perform one or more specific functions. An engine is typically implemented as one or more software modules or components installed on one or more computers, which can be located at a single site or distributed across multiple locations. In some instances, one or more dedicated computers may be used for a particular engine, while in other cases, multiple engines may operate concurrently on the same one or more computers. Examples of engine functions within the context of AI and machine learning could include data pre-processing and cleaning, feature engineering and extraction, model training and optimization, inference and prediction generation, and post-processing of results. The specific design and implementation of engines will depend on the overall architecture and the distribution of computational tasks across various hardware components, including CPUs, GPUs, TPUs, and other specialized processors.

The processes and logic flows described in this specification can be executed by one or more programmable computers running one or more computer programs to perform functions by operating on input data and generating output. Additionally, graphics processing units (GPUs) and tensor processing units (TPUs) can be utilized to enable concurrent execution of aspects of these processes and logic flows, significantly accelerating performance. This approach offers significant advantages for computationally intensive tasks often found in AI and machine learning applications, such as matrix multiplications, convolutions, and other operations that exhibit a high degree of parallelism. By leveraging the parallel processing capabilities of GPUs and TPUs, significant speedups and efficiency gains compared to relying solely on CPUs can be achieved. Alternatively or in combination with programmable computers and specialized processors, these processes and logic flows can also be implemented using specialized processing hardware, such as field-programmable gate arrays (FPGAs) or application-specific integrated circuits (ASICs), for even greater performance or energy efficiency in specific use cases.

Computers capable of executing a computer program can be based on general-purpose microprocessors, special-purpose microprocessors, or a combination of both. They can also utilize any other type of central processing unit (CPU). Additionally, graphics processing units (GPUs), tensor processing units (TPUs), and other machine learning accelerators can be employed to enhance performance, particularly for tasks involving artificial intelligence and machine learning. These accelerators often work in conjunction with CPUs, handling specialized computations while the CPU manages overall system operations and other tasks. Typically, a CPU receives instructions and data from read-only memory (ROM), random access memory (RAM), or both. The elements of a computer include a CPU for executing instructions and one or more memory devices for storing instructions and data. The specific configuration of processing units and memory will depend on factors like the complexity of the AI model, the volume of data being processed, and the desired performance and latency requirements. Embodiments can be implemented on a wide range of computing platforms, from small embedded devices with limited resources to large-scale data center systems with high-performance computing capabilities. The system may include storage devices like hard drives, SSDs, or flash memory for persistent data storage. For example, the diffusion neural network may be stored, after training, on a storage device having finite memory.

Computer-readable media suitable for storing computer program instructions and data encompass all forms of non-volatile memory, media, and memory devices. Examples include semiconductor memory devices such as read-only memory (ROM), solid-state drives (SSDs), and flash memory devices; hard disk drives (HDDs); optical media; and optical discs such as CDs, DVDs, and Blu-ray discs. The specific type of computer-readable media used will depend on factors such as the size of the data, access speed requirements, cost considerations, and the desired level of portability or permanence.

To facilitate user interaction, embodiments of the subject matter described in this specification can be implemented on a computing device equipped with a display device, such as a liquid crystal display (LCD) or an organic light-emitting diode (OLED) display, for presenting information to the user. Input can be provided by the user through various means, including a keyboard), touchscreens, voice commands, gesture recognition, or other input modalities depending on the specific device and application. Additional input methods can include acoustic, speech, or tactile input, while feedback to the user can take the form of visual, auditory, or tactile feedback. Furthermore, computers can interact with users by exchanging documents with a user's device or application. This can involve sending web content or data in response to requests or sending and receiving text messages or other forms of messages through mobile devices or messaging platforms. The selection of input and output modalities will depend on the specific application and the desired form of user interaction.

Machine learning models can be implemented and deployed using machine learning frameworks, such as TensorFlow or JAX. These frameworks offer comprehensive tools and libraries that facilitate the development, training, and deployment of machine learning models.

Embodiments of the subject matter described in this specification can be implemented within a computing system comprising one or more components, depending on the specific application and requirements. These may include a back-end component, such as a back-end server or cloud-based infrastructure; an optional middleware component, such as a middleware server or application programming interface (API), to facilitate communication and data exchange; and a front-end component, such as a client device with a user interface, a web browser, or an app, through which a user can interact with the implemented subject matter. For instance, the described functionality could be implemented solely on a client device (e.g., for on-device machine learning) or deployed as a combination of front-end and back-end components for more complex applications. These components, when present, can be interconnected using any form or medium of digital data communication, such as a communication network like a local area network (LAN) or a wide area network (WAN) including the Internet. The specific system architecture and choice of components will depend on factors such as the scale of the application, the need for real-time processing, data security requirements, and the desired user experience.

The computing system can include clients and servers that may be geographically separated and interact through a communication network. The specific type of network, such as a local area network (LAN), a wide area network (WAN), or the Internet, will depend on the reach and scale of the application. The client-server relationship is established through computer programs running on the respective computers and designed to communicate with each other using appropriate protocols. These protocols may include HTTP, TCP/IP, or other specialized protocols depending on the nature of the data being exchanged and the security requirements of the system. In certain embodiments, a server transmits data or instructions to a user's device, such as a computer, smartphone, or tablet, acting as a client. The client device can then process the received information, display results to the user, and potentially send data or feedback back to the server for further processing or storage. This allows for dynamic interactions between the user and the system, enabling a wide range of applications and functionalities.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

According to a first aspect of the present disclosure, there is provided a method performed by one or more computers for training a diffusion neural network that has parameters, wherein the method comprises:

generating a first image by using a pre-trained diffusion neural network in accordance with pre-trained values of parameters of the pre-trained diffusion neural network;
determining a target region within the first image, wherein the target region comprises a subset of pixels of the first image;

generating a second image by using the diffusion neural network in accordance with current values of the parameters of the diffusion neural network; and

training the diffusion neural network to update current values of at least a subset of the parameters of the diffusion neural network based on optimizing an objective function that depends on (i) a reward score for the second image that is determined by using a reward function and (ii) a product of a first term that depends on the target region within the first image and a second term that depends on a difference between the first image and the second image.

Optionally, generating the first image by using the pre-trained diffusion neural network comprises:

obtaining a conditioning input characterizing one or more desired properties;
obtaining a noise; and
performing, using the pre-trained diffusion neural network and in accordance with the pre-trained values of the parameters of the pre-trained diffusion neural network, a denoising process to generate the first image based on the conditioning input and the noise.

Optionally, generating the second image by using the diffusion neural network comprises:
performing, using the diffusion neural network and in accordance with the current values of the parameters of the diffusion neural network, a denoising process to generate the second image based on the conditioning input and the noise.

Optionally, determining the target region within the first image comprises:
processing the first image using an image quality model to generate a heatmap or a mask that identifies the target region within the first image.

Optionally, determining the target region within the first image comprises:

processing the first image using an image quality model to generate a plurality of quality scores; and
applying a gradient-based saliency map to the plurality of quality scores to identify the target region within the first image.

Optionally, the product of the first term that depends on the target region within the first image and the second term that depends on the difference between the first image and the second image is a Hadamard product.

Optionally, training the diffusion neural network based on optimizing the objective function comprises:
updating current values of a set of adapter parameters of the diffusion neural network based on the gradients while holding current values of a set of base parameters of the diffusion neural network fixed.

Optionally, set of base parameters of the diffusion neural network comprise the parameters of the pre-trained diffusion neural network, and wherein the current values of the set of base parameters of the diffusion neural network are fixed to the pre-trained values of the parameters of the pre-trained diffusion neural network.

Optionally, the reward function comprises one or more reward models that each measure a different aspect of the second image, and wherein the reward score is a combination of respective reward scores generated by each of the one or more reward models by processing a reward function input that includes at least a portion of the second image.

Optionally, the pre-trained diffusion neural network has been pre-trained on a diffusion model training objective that does not use the reward function.

Optionally, the pre-trained diffusion neural network is the diffusion neural network but has pre-trained values of the parameters of the pre-trained diffusion neural network that are different from the current values of the parameters of the diffusion neural network.

Optionally, the reward function input comprises the conditioning input.

Optionally, the method further comprises, after the training, using the diffusion neural network to generate an image based on a conditioning input.

Optionally, the method further comprises, after the training, storing the diffusion neural network on a computing device having a finite memory.

According to a further aspect of the present disclosure, there is provided a method performed by one or more computers, wherein the method comprises:

receiving a conditioning input characterizing one or more desired properties for an image;
generating an initial representation of the image;
generating the image by updating the initial representation across a plurality of update steps, the generating comprising, at each of the plurality of update steps:

processing a diffusion input for the update step that comprises an intermediate representation of the image and a representation of the conditioning input using a diffusion neural network to generate a denoising output for the update step;

determining a product of (i) a reward score that is generated by using a reward function based on the intermediate representation of the image and (ii) a regional map that identifies a target region of the image and that is generated by using a mask function;

computing gradients of the product with respect to pixels included in the intermediate representation of the image; and

updating the intermediate representation of the image based on the denoising output and the gradients.

Optionally, the reward function comprises a quality classifier and the reward score comprises a quality score generated by the quality classifier from processing the intermediate representation of the image.

Optionally, the reward function comprises one or more reward models that each measure a different aspect of the intermediate representation of the image, and wherein the reward score is a combination of respective reward scores generated by each of the one or more reward models by processing the intermediate representation of the image.

Optionally, the reward function comprises a summation function and the reward score comprises a sum of regional maps generated by using mask function in preceding update steps.

Optionally, updating the intermediate representation of the image based on the denoising output and the gradients comprises:

determining that a gradient exceeds a predetermined threshold value and, in response, clipping the gradient to have the predetermined threshold value; and

updating the intermediate representation of the image based on the denoising output and the clipped gradient.

According to a further aspect of the present disclosure, there is provided a system comprising one or more computers and one or more storage devices storing instructions that are operable, when executed by the one or more computers, to cause the one or more computers to perform the operations of the respective method of any preceding aspect.

According to a still further aspect of the present disclosure, there is provided a computer storage medium encoded with instructions that, when executed by one or more computers, cause the one or more computers to perform the operations of the respective method of any preceding aspect.

What is claimed is:

## Claims

1. A method performed by one or more computers for training a diffusion neural network that has parameters, wherein the method comprises:

   generating a first image by using a pre-trained diffusion neural network in accordance with pre-trained values of parameters of the pre-trained diffusion neural network;

   determining a target region within the first image, wherein the target region comprises a subset of pixels of the first image;

   generating a second image by using the diffusion neural network in accordance with current values of the parameters of the diffusion neural network; and

   training the diffusion neural network to update current values of at least a subset of the parameters of the diffusion neural network based on optimizing an objective function that depends on (i) a reward score for the second image that is determined by using a reward function and (ii) a product of a first term that depends on the target region within the first image and a second term that depends on a difference between the first image and the second image.

2. The method of claim 1, wherein generating the first image by using the pre-trained diffusion neural network comprises:

   obtaining a conditioning input characterizing one or more desired properties;

   obtaining a noise; and

   performing, using the pre-trained diffusion neural network and in accordance with the pre-trained values of the parameters of the pre-trained diffusion neural network, a denoising process to generate the first image based on the conditioning input and the noise.

3. The method of claim 2, wherein generating the second image by using the diffusion neural network comprises: performing, using the diffusion neural network and in accordance with the current values of the parameters of the diffusion neural network, a denoising process to generate the second image based on the conditioning input and the noise.

4. The method of any one of claims 1-3, wherein determining the target region within the first image comprises: processing the first image using an image quality model to generate a heatmap or a mask that identifies the target region within the first image.

5. The method of any one of claims 1-3, wherein determining the target region within the first image comprises:

   processing the first image using an image quality model to generate a plurality of quality scores; and
   applying a gradient-based saliency map to the plurality of quality scores to identify the target region within the first image.

6. The method of any one of claims 1-5, wherein the product of the first term that depends on the target region within the first image and the second term that depends on the difference between the first image and the second image is a Hadamard product.

7. The method of any one of claims 1-6, wherein training the diffusion neural network based on optimizing the objective function comprises:
   updating current values of a set of adapter parameters of the diffusion neural network based on the gradients while holding current values of a set of base parameters of the diffusion neural network fixed.

8. The method of claim 7, wherein the set of base parameters of the diffusion neural network comprise the parameters of the pre-trained diffusion neural network, and wherein the current values of the set of base parameters of the diffusion neural network are fixed to the pre-trained values of the parameters of the pre-trained diffusion neural network.

9. The method of any one of claims 1-8, wherein the reward function comprises one or more reward models that each measure a different aspect of the second image, and wherein the reward score is a combination of respective reward scores generated by each of the one or more reward models by processing a reward function input that includes at least a portion of the second image.

10. The method of claim 9, wherein the pre-trained diffusion neural network has been pre-trained on a diffusion model training objective that does not use the reward function, optionally wherein the reward function input comprises the conditioning input.

11. The method of any one of claims 1-10, wherein the pre-trained diffusion neural network is the diffusion neural network but has pre-trained values of the parameters of the pre-trained diffusion neural network that are different from the current values of the parameters of the diffusion neural network.

12. The method of claim 10 or claim 11, wherein the reward function input comprises the conditioning input.

13. The method of any one of claims 1-12, further comprising, after the training, using the diffusion neural network to generate an image based on a conditioning input.

14. A system comprising one or more computers and one or more storage devices storing instructions that are operable, when executed by the one or more computers, to cause the one or more computers to perform the operations of the respective method of any preceding claim.

15. A computer storage medium encoded with instructions that, when executed by one or more computers, cause the one or more computers to perform the operations of the respective method of any preceding claim.

FIG. 1

FIG. 2

EP 4 722 983 A1

300

Generate a denoising output for the update step
*302*

Determine a product of a reward score
and a regional map
*304*

Compute gradients of the product
*306*

Update the intermediate representation based on the
denoising output and the gradients
*308*

FIG. 3

FIG. 4

EP 4 722 983 A1

Europäisches
Patentamt

European
Patent Office

Office européen
des brevets

# EUROPEAN SEARCH REPORT

**Application Number**

EP 25 20 6486

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | Clark Kevin ET AL: "Directly Fine-tuning Diffusion Models on Differentiable Rewards", , 29 September 2023 (2023-09-29), pages 1-28, XP093266130, Retrieved from the Internet: URL:https://arxiv.org/abs/2309.17400 * page 1 - page 9; figure 2 * ----- | 1-15 | INV. G06N3/0455 G06N3/096 G06T5/60 |

| TECHNICAL FIELDS SEARCHED (IPC) |
|---|
| G06N G06T |

The present search report has been drawn up for all claims

| Place of search | Date of completion of the search | Examiner |
|---|---|---|
| The Hague | 17 December 2025 | Nourestani, S |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63702570

**Non-patent literature cited in the description**

- **SAHARIA, CHITWAN et al.** Photorealistic text-to-image diffusion models with deep language understanding.. *Advances in neural information processing systems*, 2022, vol. 35, 36479-36494
- **HOOGEBOOM, EMIEL ; JONATHAN HEEK ; TIM SALIMANS**. simple diffusion: End-to-end diffusion for high resolution images. *International Conference on Machine Learning. PMLR*, 2023
- Mobilediffusion: Instant text-to-image generation on mobile devices.. **ZHAO, YANG et al.** European Conference on Computer Vision. Cham. Springer Nature Switzerland, 2024
- **LIANG, YOUWEI et al.** Rich human feedback for text-to-image generation. *Proceedings of the IEEE/CVF Conference on Computer Vision and Pattern Recognition*, 2024
- **HAO, SUSAN et al.** Safety and fairness for content moderation in generative models. *arXiv preprint arXiv:2306.06135*, 2023
- **SELVARAJU, RAMPRASAATH R. et al.** Grad-cam: Visual explanations from deep networks via gradient-based localization.. *Proceedings of the IEEE international conference on computer vision*, 2017
- **WU, XIAOSHI et al.** Human preference score v2: A solid benchmark for evaluating human preferences of text-to-image synthesis. *arXiv preprint arXiv:2306.09341*, 2023
- **HU et al.** *arXiv:2106.09685*, 2021
- **SALIMANS ; HO**. *arXiv: 2202.00512*, 2022
- **CLARK, KEVIN et al.** Directly fine-tuning diffusion models on differentiable rewards. *arXiv preprint arXiv:2309.17400*, 2023
- **YAROM, MICHAL et al.** What you see is what you read? improving text-image alignment evaluation.. *Advances in Neural Information Processing Systems*, 2023, vol. 36, 1601-1619